# EUROPEAN PATENT SPECIFICATION

(11) **EP 2 598 863 B1**
(45) Date of publication and mention of the grant of the patent: **22.10.2014**
(21) Application number: 11746505.4
(22) Date of filing: 26.07.2011
(51) Int. Cl.: G01N 23/207

(54) **IMPROVED X-RAY DIFFRACTOMETER AND METHOD OF INSTALLING SAID IMPROVED X-RAY DIFFRACTOMETER.**
VERBESSERTES RÖNTGEN-DIFFRAKTOMETER UND VERFAHREN ZUR INSTALLATION DIESES VERBESSERTEN RÖNTGEN-DIFFRAKTOMETERS
DIFFRACTOMÈTRE À RAYONS X AMÉLIORÉ ET PROCÉDÉ D'INSTALLATION DUDIT DIFFRACTOMÈTRE À RAYONS X AMÉLIORÉ

(30) Priority: 27.07.2010 IT VI20100207
(43) Date of publication of application: 05.06.2013
(73) Proprietor: Fondazione Bruno Kessler, 38122 Trento (IT); TNX S.r.l., 38066 Riva del Garda (TN) (IT)
(72) Inventor: DEFLORIAN, Corrado, 38122 Trento (IT); MARCONI, Gian Paolo, I-25083 Gardone Riviera (BS) (IT)
(74) Representative: Bonini, Ercole
(86) International application number: PCT/EP2011/062820
(87) International publication number: WO 2012/013668

(56) References cited:
- EP-A1- 2 112 505
- JP-A- 4 335 147
- KR-A- 20020 072 078
- US-A1- 2002 031 201

## Description

The invention concerns an X-ray diffractometer with Bragg-Brentano geometry in theta-theta configuration for the crystallographic characterization of samples of solid materials, powders and/or liquids subjected to analysis.

The invention also concerns the method of installing the aforementioned improved X-ray diffractometer.

It is known that X-ray diffractometry is an established experimental technique that allows the investigation of the structure and microstructure of materials. This technique is based on the irradiation, with a beam of X-rays generated by an emitter unit, of a sample from which the beam is diffracted and captured by a detector unit.

It is also known that in order to take advantage of this technique different types of instruments have been developed, generically called X-ray diffractometers, which differ in their structural and functional characteristics.

In fact, each type of X-ray diffractometer implements a specific geometry, including the so-called Bragg-Brentano geometry which currently appears to be the most commonly used by commercially available systems.

In addition, in the same family of X-ray diffractometers with Bragg-Brentano geometry there are two main embodiments which are distinguished according to which of the aforementioned elements (emitter unit, sample and detector unit) can rotate with respect to the entire system and which of the same elements remain fixed, so as to satisfy Bragg's law.

In particular, a first configuration called theta-2theta in technical jargon is known, according to which the emitter unit remains fixed and the sample is rotated by an angle theta while the detector unit is rotated by an angle 2theta. In contrast, the second configuration, which can be implemented in the X-ray diffractometers with Bragg-Brentano geometry and is adopted, as described below, by the improved X-ray diffractometer, is the so-called theta-theta configuration.

This configuration requires the sample to remain fixed with respect to the system, while the emitter unit and the detector unit, known in technical jargon as "detector", rotate independently and simultaneously around the sample by an angle theta.

From the construction standpoint, this type of diffractometer includes a goniometric system which has the dual function of supporting and, above all, adjusting the rotation of said emitter and detector units.

In particular, said goniometric system includes a supporting body with which two separate moving mechanisms are associated, wherein the first one is associated with the emitter unit and the second one is associated with the detector unit.

According to the prior art, each of these moving mechanisms includes a motor suited to set a series of kinematic transmission mechanisms in motion, usually including a worm screw which, in turn, drives a toothed wheel, on which one of the aforementioned two units is fixed, as already mentioned above, see EP2112505. The structure built in this manner, however, presents a number of drawbacks which are described below.

A first major drawback lies in that these types of X-ray diffractometers comprise a large number of components.

Disadvantageously, this involves more difficult assembly and maintenance operations.

More precisely, it is not easy to carry out the fine adjustment and recording of the movements of the different components and in particular of the emitter unit and the detector unit.

In fact, these devices contribute to originate phenomena such as friction, wear and cyclic motion defects that considerably worsen the performance of the whole diffractometer.

In particular, there might be problems related to elasticity and mechanical clearances, always present when using mechanical drive conversion and/or motion conversion mechanisms, which compromise the optimal functioning of prior art X-ray diffractometers.

Furthermore, still disadvantageously, the large number of components increases the likelihood of failures in the aforementioned diffractometers.

Overall, all these disadvantages, resulting from the use of such prior art diffractometers, involve a decrease in precision, quality and repeatability of the results obtained from the analysis of a sample.

Finally, a further disadvantage lies in that said moving mechanisms constructed as described above contribute significantly to increasing the overall dimensions of prior art diffractometers.

The present invention intends to overcome these drawbacks.

In particular, the invention has the express purpose of achieving an improved X-ray diffractometer, the structure of which is significantly simplified and comprises a very limited number of components compared to prior art diffractometers.

Consequently, a further objective of the invention is to provide an improved X-ray diffractometer that allows for greater accuracy and repeatability of both the positioning and movements of the different components, considerably reducing the occurrence of friction and wear phenomena, unlike prior art diffractometers.

Therefore, a further objective of the present invention is to provide an improved X-ray diffractometer that allows for greater accuracy and improved quality of the results of the analysis of the different samples, compared to those obtained with prior art diffractometers.

Consequently, another objective of the invention is to provide an improved X-ray diffractometer that is easier to assemble and service.

Finally, last but not least, another objective of the invention is to provide an improved X-ray diffractometer with a more compact structure compared to prior art diffractometers.

Said objectives are achieved by an improved X-ray diffractometer having the characteristics according to the main claim.

The invention includes also the method for installing the X-ray diffractometer that is the subject of the invention.

Additional features of the improved X-ray diffractometer are described in the dependent claims.

Advantageously, the structure of the improved X-ray diffractometer of the invention allows for greater structural rigidity.

Still advantageously, the improved X-ray diffractometer of the invention also allows for the execution of analyses on samples with rather large dimensions. Finally, advantageously, the X-ray diffractometer of the invention has reduced construction and maintenance costs when compared with prior art diffractometers.

The objectives and advantages will become more apparent from the ensuing description of a preferred embodiment of the invention provided by way of a non-limiting example making reference to the accompanying drawings, wherein:
- Figure 1 shows an axonometric view of the improved X-ray diffractometer that is the subject of the invention;
- Figure 2 shows an axonometric view of the tubular supporting body belonging to the improved X-ray diffractometer of the invention;
- Figure 3 shows a section view of the tubular portion of the supporting body of the improved X-ray diffractometer of the invention according to a plane passing through the longitudinal axis of the same supporting body;
- Figure 4 shows the tubular portion of the supporting body as shown in Figure 3 to which the annular bearings are fixed;
- Figure 5 shows the tubular portion of the supporting body as shown in Figure 4 during the insertion of the flange and of the two tubular shafts from the opposite sides of the same supporting body;
- Figure 6 shows the tubular portion of the supporting body as shown in Figure 5 during the fixing of the two assembly ring nuts with their stators;
- Figure 7 shows the section view of the improved X-ray diffractometer of the invention with all its components according to a plane passing through the longitudinal axis of the diffractometer itself;
- Figure 8 shows an axonometric view of a section of the improved X-ray diffractometer of the invention shown in Figure 7;
- Figure 9 shows an axonometric view of a first tubular shaft upon which the relative rotor is fixed;
- Figure 10 shows an axonometric view of the second tubular shaft upon which the relative rotor is fixed.

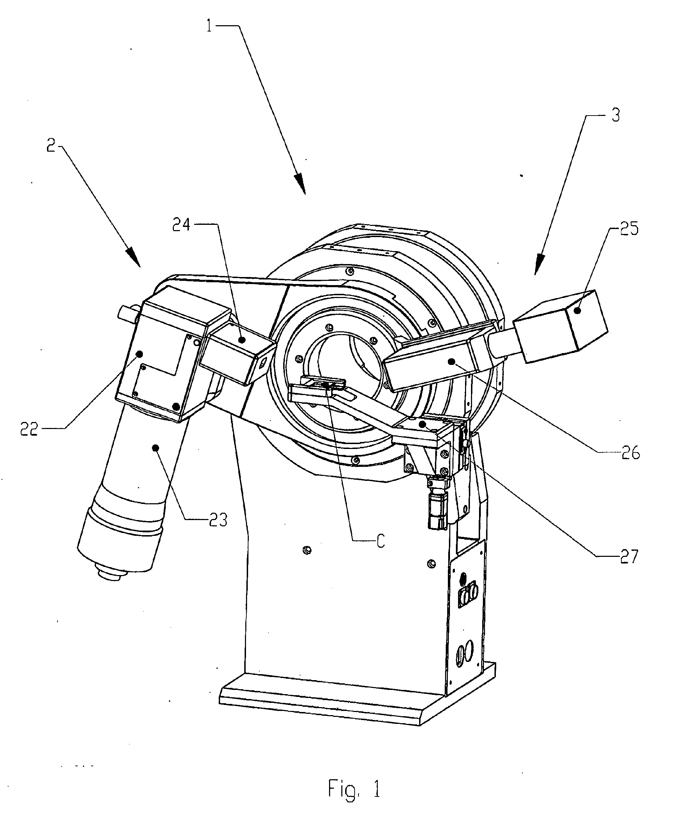

The improved X-ray diffractometer of the invention, suited to be used for the crystallographic characterization of solid, powder and/or liquid samples subjected to analyses is shown as a whole in Figure 1, where it is indicated with the number **1.**

This improved X-ray diffractometer **1** of the invention is based on the Bragg-Brentano geometry in the theta-theta configuration, according to which the independent rotation around the sample **C** is analyzed of an X-ray emitter unit **2** (theta1 goniometric axis) and a detector unit **3** (theta2 goniometric axis) of the aforementioned X-ray beam reflected on the sample itself, also shown in Figure 1.

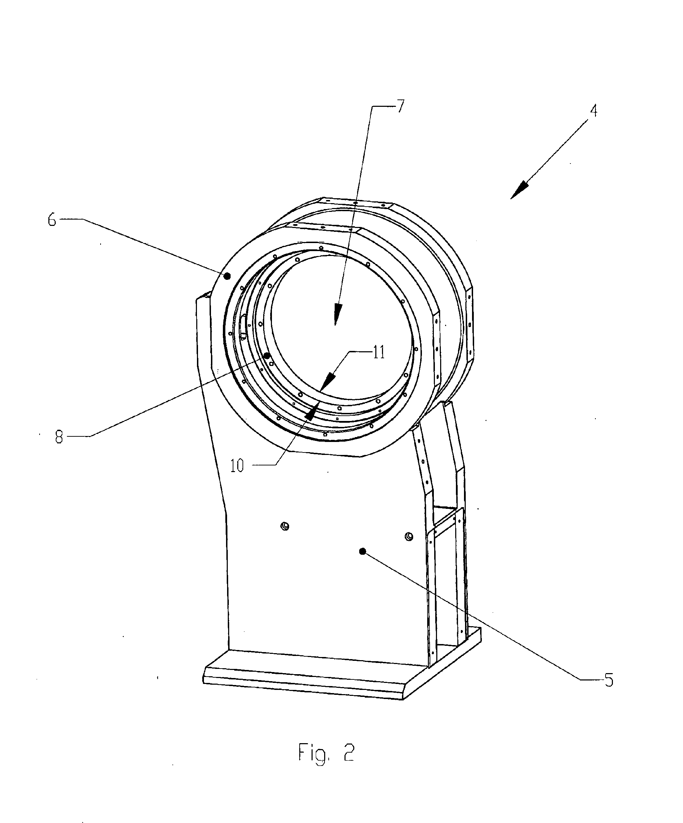

As shown in Figure 2, according to the preferred embodiment of the invention, the X-ray diffractometer **1** comprises a tubular supporting body **4** equipped with a support base **5** in order to allow the entire X-ray diffractometer **1** to be arranged and operate in a vertical position.

Preferably but not necessarily, as can be seen in Figure 2, the tubular part **6** of said supporting body **4** has a substantially cylindrical shape.

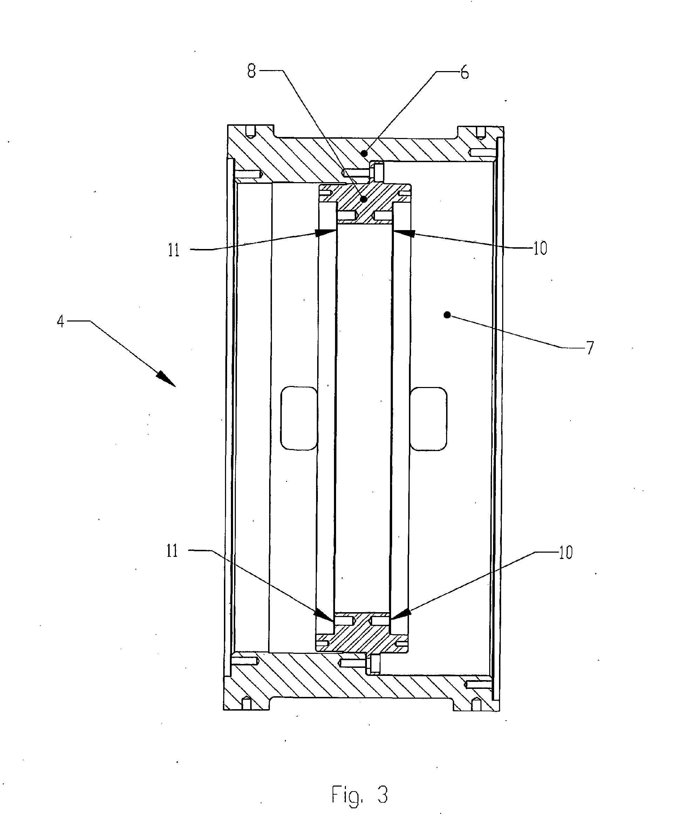

Inside the concavity **7** of the aforementioned tubular part **6** there is a flange **8** provided with a circular through hole and defined by two opposing walls **10** and **11,** as shown in Figure 3.

It cannot be excluded that in different embodiments the tubular part **6** of the supporting body **4** may not be cylindrical in shape, provided that in its concavity **7** there is said flange **8.**

As shown in Figure 3, as regards the preferred embodiment of the invention, the flange **8** is located substantially in an intermediate position within the concavity **7** of the supporting body **4.**

Preferably but not necessarily, the flange **8** is an element that is independent of the supporting body **4** and is fixed to the latter by appropriate first fastening means.

Nonetheless, in a different embodiment, not described and not shown herein, it is possible that the flange **8** is made directly on the supporting body **4.**

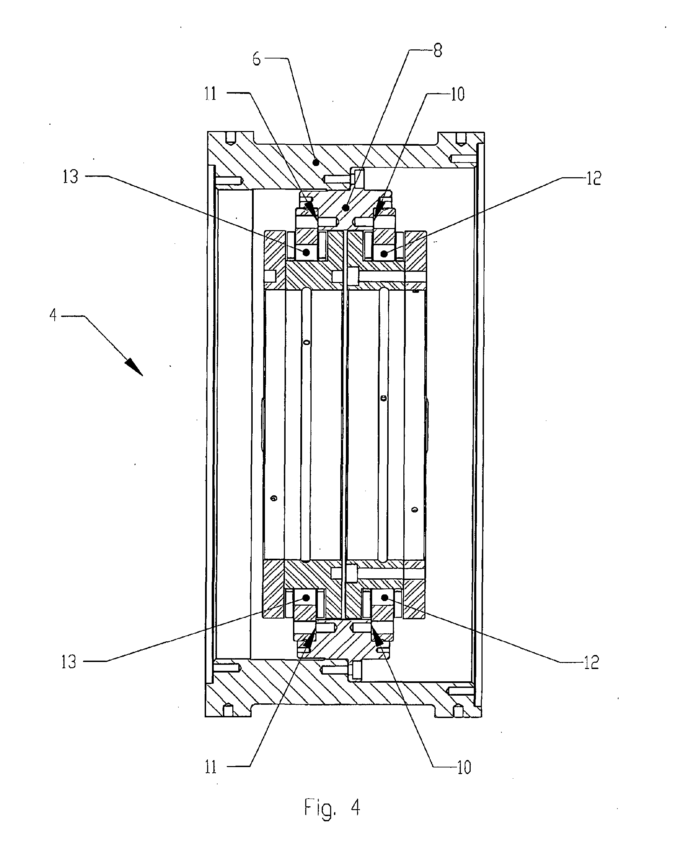

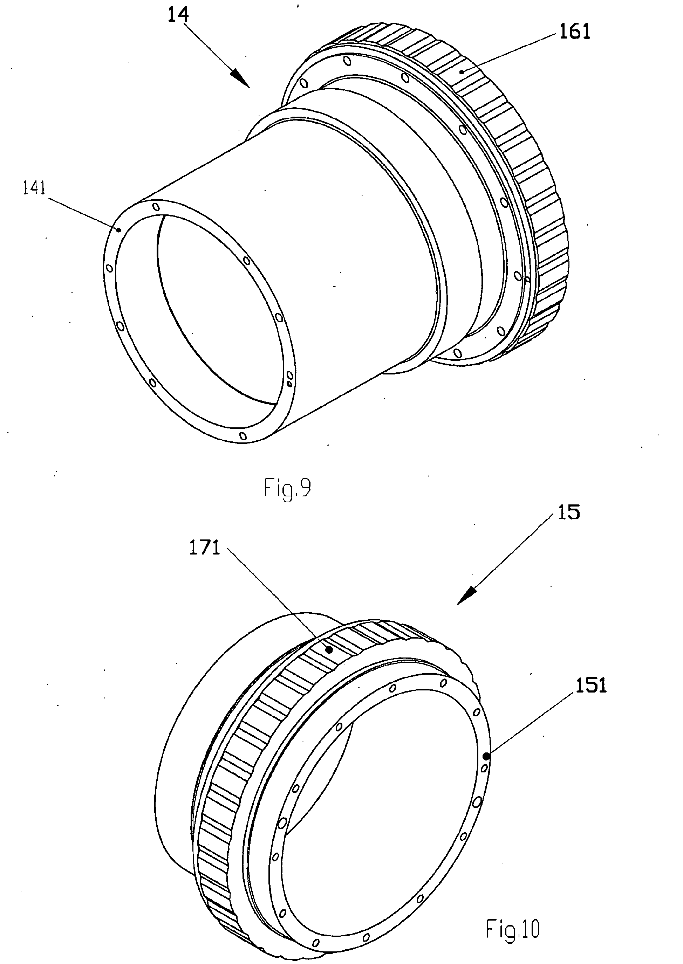

Moreover, as can be seen in Figure 4, a first and a second annular bearing **12** and **13** are respectively associated with the two opposite walls **10** and **11** of the flange **8** through second fastening means, such as screws, wherein each one of said bearings has the function of supporting the rotation of a tubular shaft **14** and **15,** respectively shown in Figures 9 and 10.

In order to minimize the coupling errors that might occur between the annular bearings **12** and **13** with respect to the aforementioned flange **8** and thereby ensure the optimal coaxial installation of the aforementioned annular bearings **12** and **13,** according to the preferred embodiment of the invention the flange is made by adopting extremely precise operating procedures.

In the preferred embodiment, which is described and shown herein, the two annular bearings **12** and **13** are of the so-called radial axial precision type.

It is possible that in different embodiments said two annular bearings **12** and **13** are of a different type, provided that they allow the rotation of the relative tubular shafts **14** and **15** associated with them and provided that such annular bearings **12** and **13** are of a known type.

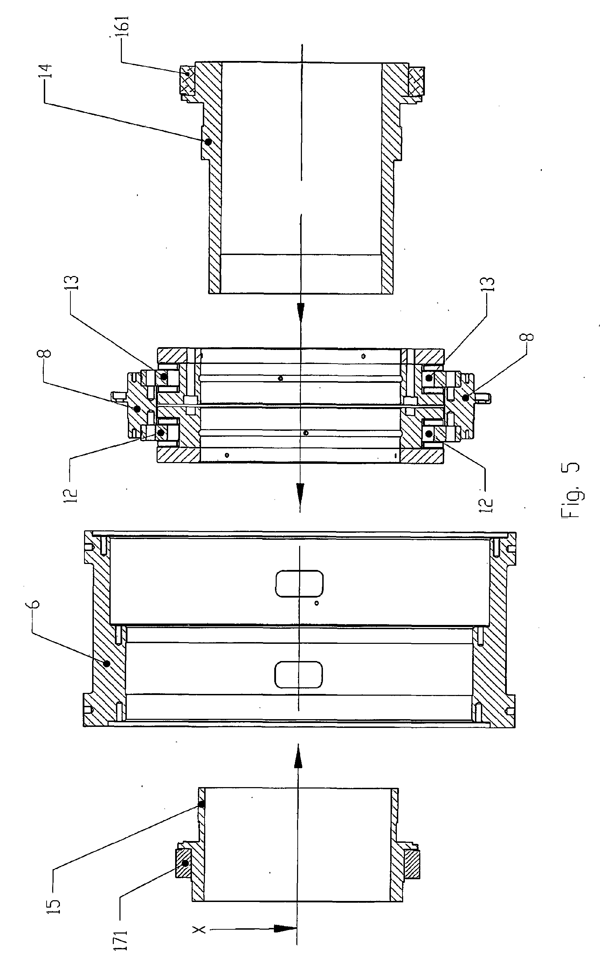

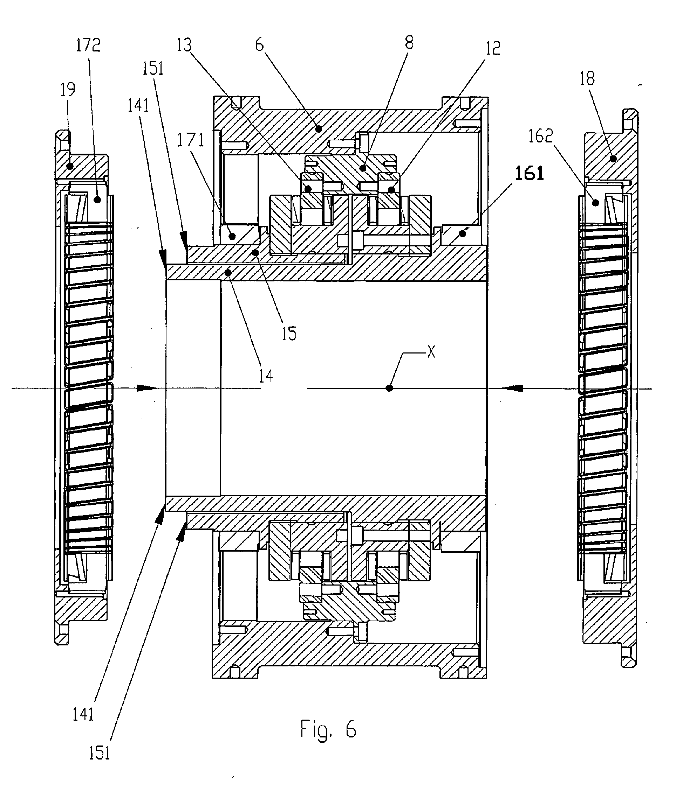

As for the tubular shafts **14** and **15,** as can be seen in Figures 5 and 6, one of them, in the preferred embodiment the tubular shaft indicated with **14** in the figures, is arranged so that it passes through the flange **8** and is internally coaxial with the second tubular shaft **15,** so that they both have their free end **141** and **151** projecting from the same side of the aforementioned supporting body **4.**

In particular, the coaxial coupling between said two tubular shafts **14** and **15** is a precise running fit coupling without interference, given that a free space of non-interference is defined between the cylindrical facing surfaces of the two tubular shafts **14** and **15.**

In this way, the two tubular shafts **14** and **15** have the possibility to rotate one on the other without contact and friction that could cause measurement inaccuracies.

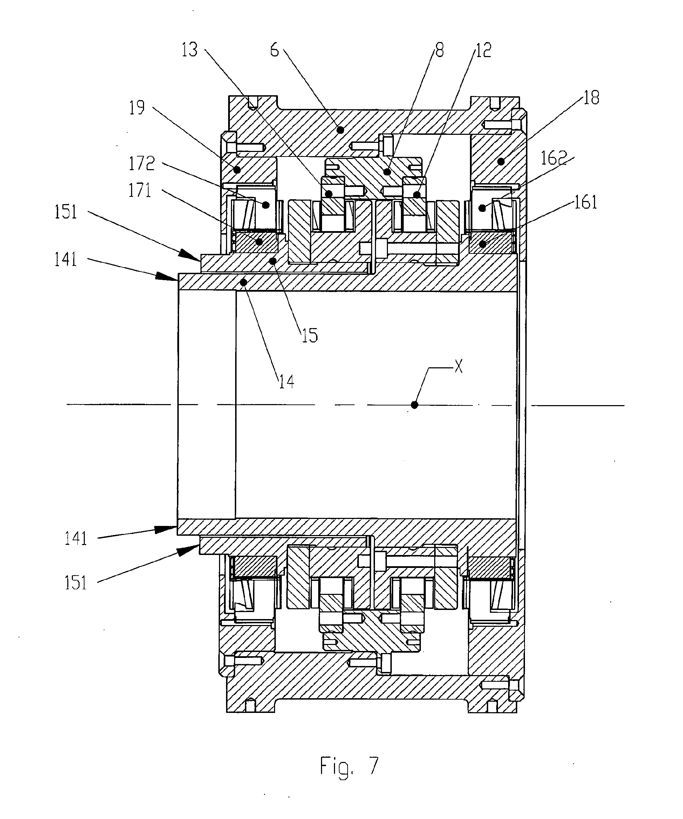

In addition, the improved X-ray diffractometer **1,** as shown in Figure 7, includes two direct drive servo operated motors **16** and **17,** annular in shape, called "Direct Drive Frameless Motors" in technical jargon, each of which is suited to put one of the tubular shafts **14** and **15** in rotation around a common axis **x.** These types of motors **16** and **17** have many advantages, both intrinsic and obtained as a result of their use in this particular improved X-ray diffractometer **1.**

A first important advantage is that the load, which in the case of the improved X-ray diffractometer **1** corresponds to each of the two tubular shafts **14** and **15,** is directly associated with the motor **16** and **17,** thus eliminating all kinematic transmission mechanisms necessarily present in the diffractometers of prior art.

Hence the presence of these direct drive motors **16** and **17** enable the attainment of the primary objectives of the improved diffractometer, namely the realization of an X-ray diffractometer **1** with a small number of components where the mechanical clearances between motors and the related tubular shafts are absent, unlike for the diffractometers of prior art in which these clearances are due to the presence of the aforementioned kinematic transmission mechanisms, resulting in a system defined "zero elasticity". Therefore, any detectable mechanical clearances in the improved X-ray diffractometer **1** are greatly reduced, since they refer only to the aforementioned annular precision bearings **12** and **13,** thus providing greater rigidity to the whole system.

Moreover, as can be seen below, the particular hollow ring shape of the two motors **16** and **17** enables the attainment of a structure of the entire diffractometer **1** suitable to execute the analysis of sampleₛ**C** even with very large dimensions, such as drive shafts, etc., that can be arranged to pass through the interior of the concavity **7.**

Also with regard to the two direct drive motors **16** and **17,** as seen in Figures 5 and 6, in the preferred embodiment described herein, each of their rotors **161** and **171** is fixed by means of gluing on the outer surface of the relative tubular shaft **14** and **15.**

The stators **162** and **172** of each motor **16** and **17** in contrast are integrally coupled to the supporting body **4.**

More precisely, as seen in Figures 6 and 7, according to the preferred embodiment the stators **162** and **172** of the two motors **16** and **17** are integrally coupled to the supporting body 4 through the interposition of the relative assembly ring nuts **18** and **19,** arranged and fixed from opposite sides of the supporting body **4** itself.

To achieve high accuracy and repeatability of the movement of the two tubular shafts **14** and **15** and therefore a high quality of the results of the analysis of samples **C,** the improved X-ray diffractometer **1** comprises means of angular measurement **20** operatively associated with each tubular shaft **14** and **15,** so as to determine in a precise manner the angular position of the tubular shafts themselves with respect to the supporting body **4.**

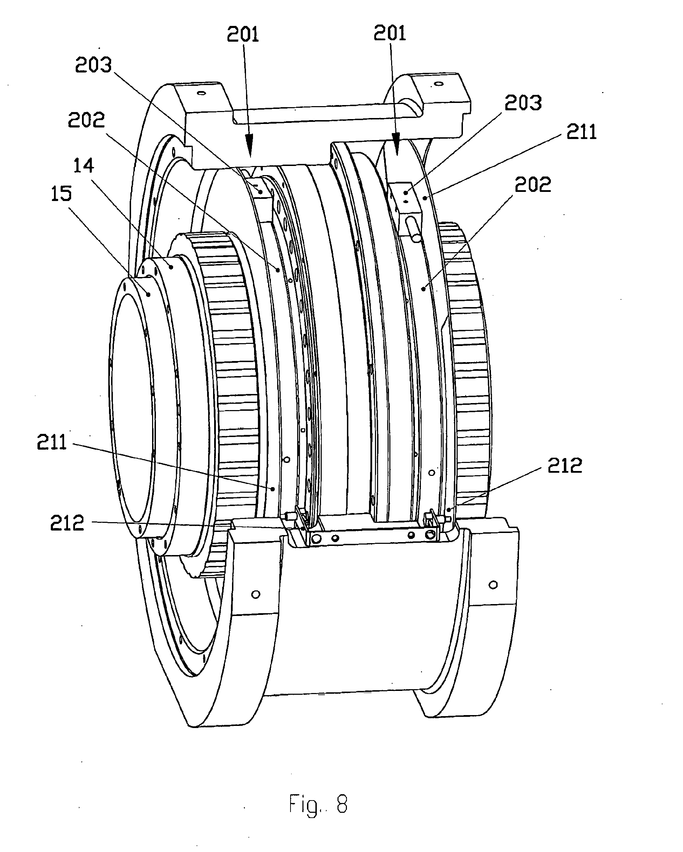

In particular, according to the preferred embodiment, each of these means of angular measurement **20** is a relative precision encoder **201,** as shown in Figure 8.

Again, preferably but not necessarily, each encoder **201** is integrated on a relative annular bearing **12** and **13,** in order to further increase the accuracy and repeatability of the measurement.

As can be seen in detail in Figure 8, each of the above encoders **201** comprises a magnetic tape **202** placed on the external cylindrical surface of the inner ring of the corresponding annular bearing **12** and **13** firmly fixed to the relative shaft **14** and **15** and a reading head **203** firmly attached to the outer ring of the same annular bearing **12** and **13** and thus to the supporting body **4.**

Nonetheless, it is possible that in different embodiments, not described and not shown herein, the aforementioned encoders **201** are not integrated in the relative annular bearings **12** and **13** and, moreover, are not the relative type. With the use of the aforementioned relative type encoder **201,** as is known, it would not be possible to determine the exact direction in which each tubular shaft **14** and **15** rotates with respect to the "zero" position of the aforementioned means of angular measurement **20** and therefore it would not be possible to determine the correct direction of rotation to be imposed on the theta1 and theta2 goniometric axes to bring them to the zero position.

Note that this reset operation is required only at start-up of the improved X-ray diffractometer **1.**

To resolve this drawback, in the preferred embodiment the rotation recognition means **21** are also associated with each of the two tubular shafts **14** and **15,** wherein the former, preferably but not necessarily, comprise, as shown in Figure 8, an annular element **211,** typically a circular disc, rotating integrally with the corresponding tubular shaft **14** and **15** and in which a first darkened section and a second clear section are identified, so as to define two positioning notches.

In addition, each of these rotation recognition means **21** comprises sensor means **212** that are integral to the supporting body **4** and suitable to detect which of the two notches is available, at that precise moment, in front of them and thus to determine the direction in which each of the tubular shafts **14** and **15** are rotated with respect to the "zero".

Nonetheless, in different embodiments, the aforementioned rotation recognition means **21** could be designed in a different manner than described above, provided that they make it possible to determine the direction of rotation for the repositioning of the two goniometric axes theta1 and theta2 at restart and provided that their realization is included in the state of the art.

Obviously, in the alternative embodiment of the improved diffractometer in which the aforementioned means of angular measurement **20** are encoders of the absolute type, as mentioned previously, the presence of the rotation recognition means **21** is not necessary.

As regards the two free ends **141** and **151** of the tubular shafts **14** and **15,** as seen in Figure 1, they are associated with the X-ray emitter unit **2** and detector unit **3** of the X-rays diffracted from the sample C subjected to analysis in order to define, as mentioned above, respectively, the theta1 goniometric axis and the theta2 goniometric axis of the diffractometer 1, coaxial with each other and independent in their rotation.

In particular, as seen in Figure 1, in the preferred embodiment of the improved diffractometer the X-ray detector unit **3** is associated with the tubular shaft **14** arranged so that it passes through the flange **8** and internally coaxial with the second tubular shaft **15** which, in turn, is associated with the X-ray emitter unit **2.**

This choice is due to the fact that the X-ray emitter unit **2** has a greater weight than the detector unit **3** and therefore associating it with the tubular shaft **15** with a larger diameter ensures the greater rigidity of the whole diffractometer 1. As for the X-ray emitter unit **2** in particular, as shown in Figure 1, this comprises a cap **22,** inside which there are an X-ray tube **23** and a shutter **24** which inhibits the passage of said X-rays to the outside, if necessary.

The detector unit **3,** in contrast, in technical jargon called detector as mentioned above, comprises a sensor device **25** of the X-ray beam and its relative optical equipment **26.**

Finally, as noted in Figure 1, the diffractometer **1** according to the preferred embodiment comprises supporting means **27** associated in an adjustable manner to the supporting body **4,** on the side of said emitting unit **2** and of the detector unit **3,** that enable the precise support of the sample **C** of material to be analyzed.

In different embodiments of the improved X-ray diffractometer **1** it is possible that these supporting means **27** are not present, since the sample **C** to be analyzed could be held in place by devices external to the diffractometer **1.** The particular structure of the improved X-ray diffractometer **1,** as is easily understood, advantageously allows the optimization of the assembly and maintenance operations, compared to prior art diffractometers.

In fact, the above invention also relates to the mounting procedure of the improved X-ray diffractometer **1,** the stages of which are detailed below.

In particular, the operator responsible for installation first carries out the attachment of each of the aforementioned annular bearings **12** and **13** to one of the two opposing walls **10** and **11** of flange **8,** as shown in Figure 3.

In the preferred embodiment, in which the flange **8** is an element independent of the supporting body **4,** as noted above, the operation just described is carried out when the flange **8** itself has not yet been associated to the aforementioned supporting body **4,** as shown in Figure 5.

Subsequently, the unit comprising the flange **8** with the annular bearings **12** and **13** is fixed to the supporting body **4.**

However, it is possible that in different embodiments, the first step is to fix the flange **8** to the supporting body **4** and only after are the annular bearings **12** and **13** fixed to the flange **8** itself.

Additionally, in an alternative embodiment, whereby the flange **8** is made directly from the supporting body **4,** obviously the two annular bearings **12** and **13** are fixed introducing them individually from opposite sides to the inside of the concavity **7** of the supporting body **4** and then fixed on the corresponding walls **10** and 11 of the flange **8.**

As mentioned above the flange **8** is designed in a precise manner, so that the two bearings **12** and **13** can be fixed as coaxial with each other as possible. The installation method also includes the fixing of each one of the rotors **161** and **171** pertaining to the two motors **16** and **17** to the corresponding tubular shafts **14** and **15,** as shown in Figure 5.

This fixing, in particular, according to the preferred embodiment, occurs by gluing the pieces.

Subsequently, as indicated by the arrows in Figure 5, the method includes the insertion of the two tubular shafts **14** and **15,** from the opposite sides of the supporting body **4,** so that, as mentioned earlier, one of the two tubular shafts, in the preferred embodiment tubular shaft **14** in the figures, passes through the flange **8** and is internally coaxial with the second tubular shaft **15.**

This arrangement allows, firstly, the free ends **141** and **151** of the two tubular shafts **14** and **15** to be fixed to the same part of the said tubular body **4.** Secondly, this configuration of the different components and related arrangements, as shown in Figure 1, allows the definition of a through hole along the entire structure of the diffractometer **1,** so as to permit the analysis, as mentioned earlier, of samples **C** of large dimensions and, in particular, lengths by arranging them to pass through the aforementioned hole.

Finally, the procedure for installing the diffractometer **1** includes the integral coupling of the two stators **162** and **172** of the aforementioned motors **16** and **17** from the opposite sides of the supporting body **4,** so that the stators are substantially coplanar with the corresponding rotors **161** and **171** fixed in turn to the tubular shafts **14** and **15,** as shown in Figure 7.

In addition to the phases described above, the method for installing the diffractometer can include additional secondary phases, not described in detail here, such as the assembly of the supporting means **27** of the sample **C** or the insertion of the rotation recognition means **21.**

Based on the above it is clear that the improved X-ray diffractometer **1** and the method of installing the aforementioned diffractometer achieve the set objectives.

In particular, the invention achieves the objective of realizing an improved X-ray diffractometer, the structure of which is greatly simplified and comprises a very limited number of components compared to prior art diffractometers. Consequently, another objective attained is the construction of an improved X-ray diffractometer that allows for greater accuracy and repeatability of both positioning and movement of the different components thus considerably reducing the occurrence of friction and wear, unlike diffractometers of the known art.

In addition, the objective of constructing an improved X-ray diffractometer which allows for greater accuracy and improved quality of the analysis conducted on different samples compared to those obtained with prior art diffractometers is achieved.

Consequently, another achievement is the realization of an improved X-ray diffractometer that is easier to assemble and on which it is easy to carry out maintenance operations.

In particular, it can be noted that, advantageously, the duplication of many components in a single improved diffractometer, such as motors, bearings, encoders and others, makes the provision of spare parts and maintenance operations on the diffractometer itself easier.

Finally, a further achievement is the realization of an improved X-ray diffractometer with a more compact structure with respect to diffractometers of the known art.

As noted, the improved X-ray diffractometer also achieves the advantage of greater structural rigidity.

Another advantage achieved is the lower cost of construction and maintenance in comparison with diffractometers of the prior art.

In the execution phase, the improved X-ray diffractometer and the method of installing the aforementioned diffractometer may be subject to variations of the embodiments which, although not shown and not described herein and even if not mentioned in the claims below, shall all be considered protected by this patent.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. X-ray diffractometer (1) with Bragg-Brentano geometry in theta-theta configuration for the crystallographic characterization of samples (C) of solid materials, powders and/or liquids subjected to analysis, of the type comprising:
- a supporting tubular body (4) integrally associated with a flange (8) provided with a circular through hole (9) and defined by two opposing walls (10, 11) to which a first and a second annular bearings (12, 13) are respectively associated;
- two tubular shafts (14, 15), each one of which is supported during rotation respectively by said first and by said second annular bearing (12, 13), and one of said tubular shafts (14) being arranged so that it passes through said flange (8) and is internally coaxial with the second one of said tubular shafts (15), so that they both have their free end (141, 151) projecting from the same side of said supporting body (4);
- two direct drive servo operated motors (16, 17) annular in shape, each one of which is suited to set one of said tubular shafts (14, 15) rotating around the common axis (x);
- a unit (2) suited to emit X-rays and a unit (3) suited to detect said X-rays diffracted from said sample (C), each one of which is associated with one of said free ends (141, 151) of said tubular shafts (14, 15), in such a way as to define the goniometric axis theta1 and the goniometric axis theta2 of said diffractometer (1) that are coaxial to each other and rotate independently.

2. X-ray diffractometer (1) according to claim 1), **characterized in that** each one of said motors (16, 17) has its rotor (161, 171) integrally connected to the corresponding tubular shaft (14, 15) and the stator (162, 172) integrally coupled with said supporting body (4).

3. X-ray diffractometer (1) according to claim 2), **characterized in that** each one of said stators (162, 172) is coupled with the supporting body (4) through the interposition of assembly ring nuts (18, 19).

4. X-ray diffractometer (1) according to any of the preceding claims, **characterized in that** angular measurement means (20) are operatively associated with each one of said tubular shafts (14, 15).

5. X-ray diffractometer (1) according to claim 4), **characterized in that** each one of said angular measurement means (20) is an encoder of the relative type (201).

6. X-ray diffractometer (1) according to any of the preceding claims, **characterized in that** the coaxial coupling between said two tubular shafts (14, 15) is a precise running fit coupling without interference.

7. X-ray diffractometer (1) according to any of the preceding claims, **characterized in that** it comprises means (27) suited to support said sample (C) and associated in an adjustable manner with said supporting body (4) on the side of said emitter unit (2) and of said detector unit (3).

8. X-ray diffractometer (1) according to any of the preceding claims, **characterized in that** said annular bearings (12, 13) are of the radial axial precision type.

9. X-ray diffractometer (1) according to any of the preceding claims, **characterized in that** each one of said tubular shafts (14, 15) is associated with means for recognising the rotation (21) suited to define the rotation direction of the restart of said tubular shafts (14, 15) according to their angular position with respect to said supporting body (4).

10. X-ray diffractometer according to claim 9), **characterized in that** each one of said rotation recognition means (21) comprises an annular element (211) rotating integrally with the corresponding tubular shaft (14, 15) and provided with a plurality of notches, as well as sensor means (212) that are integral with said supporting body (4) and suited to detect said plurality of notches so as to define the rotation direction of said tubular shaft (14,15).

11. X-ray diffractometer (1) according to any of the preceding claims, **characterized in that** said unit (3) suited to detect said X-rays is associated with said tubular shaft (14) arranged so that it passes through said flange (8) and is internally coaxial with the second one of said tubular shafts (15) with which said X-ray emitter unit (2) is associated.

12. Method for installing an X-ray diffractometer of the type carried out according to any of the preceding claims, **characterized in that** it comprises the following steps:
- fixing said first and said second annular bearing (12, 13) to said two opposing walls (10, 11) of said flange (8);
- fixing said rotor (161, 171) of each one of said two motors (16, 17) to the corresponding tubular shaft (14, 15);
- inserting said two tubular shafts (14, 15) on opposite sides of said supporting body (4), so that one of said tubular shafts (14) is arranged so that it passes through said flange (8) and is internally coaxial with the second one of said tubular shafts (15) and so that both said tubular shafts (14, 15) have their free end (141, 151) projecting from the same side of said supporting body (4);
- fixing each one of said stators (162, 172) of said two motors (16, 17) on opposite sides of said supporting body (4) in such a way that they are substantially coplanar with the corresponding rotors (161, 171) fixed to said tubular shafts (14, 15).

## Patentansprüche

1. Röntgendiffraktometer (1) mit Bragg-Brentano-Geometrie in Theta-Theta-Konfiguration für die kristallographische Charakterisierung von Proben (C) zu analysierender fester, pulverförmiger und/oder flüssiger Stoffe des Typs, der Folgendes enthält:
- einen röhrenförmigen Stützkörper (4), der vollständig mit einem Flansch (8) verbunden ist, welcher eine kreisförmige Bohrung (9) aufweist und durch zwei einander gegenüberliegende Wände (10, 11) definiert ist, mit denen jeweils ein erstes und ein zweites, ringförmiges Lager (12, 13) verbunden ist;
- zwei röhrenförmige Wellen (14, 15), von denen eine jede während der Drehung durch jeweils das erste und durch das zweite, ringförmige Lager (12, 13) gestützt wird und wobei eine der besagten röhrenförmigen Wellen (14) den besagten Flansch (8) passierend positioniert ist und innen koaxial zu der zweiten röhrenförmigen Welle (15) steht, so dass die freien Enden (141, 151) beider Wellen aus derselben Seite des besagten Stützkörpers (4) herausragen;
- zwei ringförmige Servo-Motoren mit Direktantrieb (16, 17), von denen ein jeder geeignet ist, eine der besagten, röhrenförmigen Wellen (14, 15) um die gemeinsame Achse (x) in Drehung zu versetzen;
- eine Röntgenstrahl-Sendeeinheit (2) und eine Einheit (3) zur Erfassung der besagten, durch die besagte Probe (C) diffraktierte Röntgenstrahlen, wobei jeder der beiden mit einem der besagten, freien Enden (141, 151) der besagten röhrenförmigen Wellen (14, 15) verbunden ist, so dass die goniometrische Achse Theta1 und die goniometrische Achse Theta2 des besagten Diffraktometers (1) definiert werden, welche untereinander koaxial und unabhängig drehend sind.

2. Röntgendiffraktometer (1) gemäß Patentanspruch 1), **dadurch gekennzeichnet, dass** jeder der besagten Motoren (16, 17) seinen Rotor (161, 171) vollständig mit der entsprechenden, röhrenförmigen Welle (14, 15) und den Stator (162, 172) vollständig mit dem besagten Stützkörper (4) verbunden hat.

3. Röntgendiffraktometer (1) gemäß Patentanspruch 2), **dadurch gekennzeichnet, dass** jeder der besagten Statoren (162, 172) durch eingefügte Montage-Ringnutmuttern (18, 19) mit dem Stützkörper (4) verbunden ist.

4. Röntgendiffraktometer (1) gemäß eines jeden der vorstehenden Patentansprüche, **dadurch gekennzeichnet, dass** Winkelmessmittel (20) operativ mit jeder der besagten, röhrenförmigen Wellen (14, 15) verbunden sind.

5. Röntgendiffraktometer (1) gemäß Patentanspruch 4), **dadurch gekennzeichnet, dass** jedes der besagten Winkelmessmittel (20) ein Encoder vom relativen Typ (201) ist.

6. Röntgendiffraktometer (1) gemäß eines jeden der vorstehenden Patentansprüche, **dadurch gekennzeichnet, dass** die koaxiale Kupplung zwischen den besagten zwei röhrenförmigen Wellen (14, 15) eine interferenzfreie Präzisions-Laufpassung ist.

7. Röntgendiffraktometer (1) gemäß eines jeden der vorstehenden Patentansprüche, **dadurch gekennzeichnet, dass** er Mittel (27) umfasst, die geeignet sind, die besagte Probe (C) zu stützen, und an der Seite der besagten Sendeeinheit (2) und der besagten Erfassungseinheit (3) in verstellbarer Weise mit dem besagten Stützkörper (4) verbunden sind.

8. Röntgendiffraktometer (1) gemäß eines jeden der vorstehenden Patentansprüche, **dadurch gekennzeichnet, dass** die besagten, ringförmigen Lager (12, 13) vom radial-axialen Präzisionstyp sind.

9. Röntgendiffraktometer (1) gemäß eines jeden der vorstehenden Patentansprüche, **dadurch gekennzeichnet, dass** jede der besagten, röhrenförmigen Wellen (14, 15) mit Mitteln (21) zur Erkennung der Drehung verbunden sind, die geeignet sind, den Drehsinn des Neustarts der besagten röhrenförmigen Wellen (14, 15) gemäß ihrer Winkelposition zum besagten Stützkörper (4) zu bestimmen.

10. Röntgendiffraktometer gemäß Patentanspruch 9), **dadurch gekennzeichnet, dass** jedes der besagten Drehsinn-Erkennungsmittel (21) ein ringförmiges Element (211) umfasst, das gemeinsam mit der entsprechenden, röhrenförmigen Welle (14, 15) dreht und mit einer Vielzahl Kerben sowie Sensormittel (212) versehen ist, welche eine Einheit mit dem besagten Stützkörper (4) bilden und geeignet sind, die besagte Vielzahl Kerben zu erfassen, um den Drehsinn der besagten, röhrenförmigen Welle (14, 15) zu definieren.

11. Röntgendiffraktometer (1) gemäß eines jeden der vorstehenden Patentansprüche, **dadurch gekennzeichnet, dass** die besagte Einheit (3) zur Erfassung der besagten Röntgenstrahlen mit der besagten, röhrenförmigen Welle (14) verbunden ist, die so angeordnet ist, dass sie den besagten Flansch (8) passiert und innen koaxial zur zweiten röhrenförmigen Welle (15) steht, mit dem die besagte Röntgenstrahlen-Sendeeinheit (2) verbunden ist.

12. Methode zur Installierung eines Röntgendiffraktometers des gemäß eines jeglichen der vorstehenden Patentansprüche ausgeführten Typs, **dadurch gekennzeichnet, dass** sie folgende Schritte umfasst:
- Befestigung des besagten ersten und zweiten, ringförmigen Lagers (12, 13) an den besagten zwei einander gegenüberliegenden Wänden (10, 11) des besagten Flansches (8);
- Befestigung des besagten Rotors (161, 171) jedes der besagten zwei Motoren (16, 17) an der entsprechenden, röhrenförmigen Welle (14, 15);
- Einsetzen der beiden röhrenförmigen Wellen (14, 15) an einander gegenüberliegenden Seiten des besagten Stützkörpers (4), so dass eine der besagten, röhrenförmigen Wellen (14) so angeordnet ist, dass sie den besagten Flansch (8) passiert und innen koaxial zur zweiten röhrenförmigen Welle (15) steht, und so, dass beide besagten, röhrenförmigen Wellen (14, 15) mit ihrem freien Ende (141, 151) an derselben Seite des besagten Stützkörpers (4) herausragen;
- Befestigung jedes der besagten Statoren (162, 172) der besagten zwei Motoren (16, 17) an einander gegenüberliegenden Seiten des besagten Stützkörpers (4), so dass sie im Wesentlichen mit den entsprechenden, an den besagten, röhrenförmigen Wellen (14, 15) befestigten Rotoren (161, 171) komplanar sind.

## Revendications

1. Diffractomètre à rayons X (1) à géométrie Bragg-Brentano en configuration thêta-thêta pour la caractérisation cristallographique d'échantillons (C) de matériaux solides, poudres et/ou liquides soumis à l'analyse, du type comprenant:
- un corps de support tubulaire (4) associé intégralement avec une bride (8) dotée d'un trou passant circulaire (9) et définie par deux parois opposées (10, 11) sur lesquelles sont associés respectivement un premier et un deuxième roulement annulaire (12, 13);
- deux arbres tubulaires (14, 15) chacun desquels est supporté, durant la rotation, respectivement par ledit premier et par ledit deuxième roulement annulaire (12, 13) et un desdits arbres tubulaires (14) étant disposé de façon à ce qu'il passe à travers ladite bride (8) et est coaxial intérieurement avec le deuxième desdits arbres tubulaires (15), de façon à ce qu'ils présentent leur extrémité libre (141, 151) saillant du même côté dudit corps de support (4);
- deux moteurs à prise direct (16, 17) servo commandés de forme annulaire, chacun desquels est apte à mettre en rotation un desdits arbres tubulaires (14, 15) autour de l'axe commun (x);
- un groupe émetteur de rayons X (2) et un groupe détecteur (3) desdits rayons X diffractés dudit échantillon (C), chacun desquels est associé avec une desdites extrémités libres (141, 151) desdits arbres tubulaires (14, 15) de façon à définir l'axe goniométrique thêta1 et l'axe goniométrique thêta2 dudit diffractomètre (1) qui sont coaxiaux entre eux et indépendants en rotation.

2. Diffractomètre à rayons X (1) selon la revendication 1), **caractérisé en ce que** chacun desdits moteurs (16, 17) présente son rotor (161, 171) relié solidairement de l'arbre tubulaire correspondant (14, 15) et le stator (162, 172) accouplé solidairement dudit corps de support (4).

3. Diffractomètre à rayons X (1) selon la revendication 2), **caractérisé en ce que** chacun desdits stators (162, 172) est accouplé au corps de support (4) par l'interposition de bagues de montage (18, 19).

4. Diffractomètre à rayons X (1) selon l'une quelconque des revendications précédentes, **caractérisé en ce que** des moyens de mesure angulaire (20) sont opérationnellement associés avec chacun desdits arbres tubulaires (14, 15).

5. Diffractomètre à rayons X (1) selon la revendication 4), **caractérisé en ce que** chacun desdits moyens de mesure angulaires (20) est un encodeur de type relatif (201).

6. Diffractomètre à rayons X (1) selon l'une quelconque des revendications précédentes, **caractérisé en ce que** l'accouplement coaxial entre lesdits deux arbres tubulaires (14, 15) est un accouplement libre de précision sans interférence.

7. Diffractomètre à rayons X (1) selon l'une quelconque des revendications précédentes, **caractérisé en ce qu'il** comprend des moyens de soutien (27) dudit échantillon (C) associés de manière réglable avec ledit corps de support (4) du côté dudit groupe émetteur (2) et dudit groupe détecteur (3).

8. Diffractomètre à rayons X (1) selon l'une quelconque des revendications précédentes, **caractérisé en ce que** lesdits roulements annulaires (12, 13) sont du type radiaux axiaux de précision.

9. Diffractomètre à rayons X (1) selon l'une quelconque des revendications précédentes, **caractérisé en ce que** chacun desdits arbres tubulaires (14, 15) est associés avec des moyens d'identification de la rotation (21) aptes à définir la direction de rotation desdits arbres tubulaires (14, 15) selon leur position angulaire par rapport audit corps de support (4).

10. Diffractomètre à rayons X selon la revendication 9), **caractérisé en ce que** chacun desdits moyens d'identification de la rotation (21) comprend un élément annulaire (211) solidaire en rotation de l'arbre tubulaire correspondant (14, 15) et doté d'une pluralité d'encoches et des moyens capteurs (212) qui sont solidaires dudit corps de support (4) et aptes à détecter ladite pluralité d'encoches de façon à définir la direction de rotation dudit arbre tubulaire (14, 15).

11. Diffractomètre à rayons X (1) selon l'une quelconque des revendications précédentes, **caractérisé en ce que** ledit groupe détecteur (3) desdits rayons X est associé avec ledit arbre tubulaire (14) disposé de façon à ce qu'il passe à travers ladite bride (8) et soit coaxial intérieurement au deuxième desdits arbres tubulaires (15) avec lequel ledit groupe émetteur de rayons X (2) est associé.

12. Méthode pour le montage d'un diffractomètre à rayons X du type selon l'une quelconque des revendications précédentes, **caractérisée en ce qu'elle** prévoit les phases suivantes:
- fixer ledit premier et ledit deuxième roulement annulaire (12, 13) sur lesdites deux parois opposées (10, 11) de ladite bride (8);
- fixer ledit rotor (161, 171) de chacun desdits deux moteurs (16, 17) sur l'arbre tubulaire correspondant (14, 15);
- insérer lesdits deux arbres tubulaires (14, 15) sur les côtés opposés dudit corps de support (4), de façon à ce qu'un desdits arbres tubulaires (14) soit disposé de façon à ce qu'il passe à travers ladite bride (8) et soit coaxial intérieurement au deuxième desdits arbres tubulaires (15) et de façon à ce que lesdits deux arbres tubulaires (14, 15) présentent leur extrémité libre (141, 151) saillant du même côté dudit corps de support (4);
- fixer chacun desdits stators (162, 172) desdits deux moteurs (16, 17) sur les côtés opposés dudit corps de support (4) de façon à résulter essentiellement coplanaires avec les rotors correspondants (161, 171) fixés sur lesdits arbres tubulaires (14, 15).
